# EUROPEAN PATENT APPLICATION

(11) **EP 1 293 242 A2**
(43) Date of publication of application: **19.03.2003**
(21) Application number: 02078712.3
(22) Date of filing: 06.09.2002
(51) Int. Cl.: B01D 53/26, F28D 9/00, F28F 9/26, F04B 39/16

(54) **Group of heat exchangers for compressed gas refrigeration dryers**

(30) Priority: 14.09.2001 IT MI20011917
(71) Applicant: Domnick Hunter Hiross S.p.A., 35020 Sant'Angelo Di Piove (Padova) (IT)
(72) Inventor: Praxmarer, Peter Paul, 35010 Vigonza (Padova) (IT); Bellemo, Luciano, 30015 Chioggia (Venezia) (IT)
(74) Representative: Martegani, Franco

(57) **Abstract**

The invention relates to a group of heat exchangers for compressed gas refrigeration dryers, in which the heat exchangers (20,30) comprise a series of finned, closely spaced plates (21, 31), creating a series of passages for the countercurrent flow of fluids, and in which the gas/gas heat exchanger (20) is positioned beside the evaporator (30), so that an outlet zone (28) of a precooling section (22) of the gas/gas heat exchanger (20) directs the mixture of compressed gases directly to an inlet zone (36) of a cooling section (32) of the evaporator (30).

## Description

The present invention relates to a group of heat exchangers for compressed gas refrigeration dryers.

A compressed gas refrigeration dryer is a refrigerating machine which is normally used for extracting humidity from a certain flow of compressed air or any other compressed gas; in this respect, even though reference is made hereunder to compressed air, it is evident that all disclosures are equally valid for any other compressed gas or mixture of compressed gases.

Humidity present in compressed air is the main cause of corrosion and premature breakage of piping and the malfunctioning or complete uselessness of machines using compressed gas, and it must therefore be eliminated before supplying compressed air to the above equipment.

In the traditional functioning of a compressed air refrigeration dryer, the compressed air which enters the dryer is cooled to condense the humidity (water vapour). The dryer essentially comprises a gas/gas heat recuperator or heat exchanger and an evaporator, which, in practice, are two heat exchangers.

A group of heat exchangers means the combination of said heat recuperator and said evaporator.

The compressed air to be dried contains water vapor, normally having a relativity humidity equal to about 100%.

It is thus initially pre-cooled in a pre-cooling section of the heat recuperator; the compressed air then leaves the pre-cooling section of the gas/gas exchanger and continues to be cooled in a cooling section of the evaporator until it reaches the desired dew point.

A refrigerant is used for this cooling, which evaporates in an evaporation section of the evaporator itself. This evaporating refrigerant is produced by a refrigeration cycle.

At this point, the compressed air, cooled first in the heat recuperator and subsequently in the evaporator, reaches an air condenser in which the condensed water vapor, contained therein, is separated from the air. The condensed water vapor is then discharged from a condensed water vapor discharger.

The air leaving the air condenser passes through the initial heat recuperator of the cycle, in a heating section, in order to effect the pre-cooling.

There are numerous types of gas/gas heat exchangers and evaporators, obtained with various technologies.

In particular, there are compressed gas refrigeration dryers in which the pre-cooling and heating sections of the heat recuperator, together with the air cooling section and refrigerant evaporation section of the evaporator are completely finned to increase the efficiency and compactness of the heat exchanger group.

For example the group of heat exchangers described in patents U.S. 5,845,505 and U.S. 6,085,529, can be mentioned.

In these, the recuperator and evaporator are characterized by a heat exchange with cross-streams, and more specifically perpendicular to each other.

Furthermore a particular and complex type of finning is used to obtain a sufficient heat exchange.

An objective of the present invention is to produce a group of heat exchangers, for compressed gas refrigeration dryers, having a more effective thermal exchange.

Another objective of the present invention is to produce a group of heat exchangers, for compressed gas refrigeration dryers, having reduced dimensions.

A further objective of the present invention is to solve the above drawbacks of the known art in an extremely simple, economic and particularly functional way.

In view of the above objectives, according to the present invention, the idea was to produce a group of heat exchangers for compressed gas refrigeration dryers, having the characteristics specified in the enclosed claims.

The structural and functional characteristics of the present invention and its advantages with respect to the known art are evident and more clearly defined in the following description, referring to the enclosed drawings which show a group of heat exchangers for compressed gas refrigeration dryers produced according to the innovative principles of the invention itself.
In the drawings:
- figure 1 shows a scheme of a compressed gas refrigeration dryer;
- figure 2 shows a scheme of a group of heat exchangers for compressed gas refrigeration dryers, according to the disclosures of the present invention;
- figure 3 is an axonometric view which shows a gas/gas heat recuperator or heat exchanger and an evaporator of the dryer schematized in figure 2;
- figure 4 is an axonometric view of the inlet and outlet connections for compressed gas of two dryers according to the invention, arranged in parallel;
- figure 5 is a side section of two inlet and outlet collectors, suitable for connecting the inlet and outlet connections, respectively, illustrated in figure 4;
- figure 6 is a front section of a collector of figure 5, equipped with a flange for the external connection of the dryer;
- figure 7 represents an alternative in the finning arrangement in sections 26, 28, 36 and 38 and in 22 and 32.

With reference to the drawings, a compressed gas refrigeration dryer is indicated as a whole with 10, and in the example illustrated comprises a group of heat exchangers, object of the present invention, including a gas/gas heat exchanger or heat recuperator 20 and an evaporator 30.

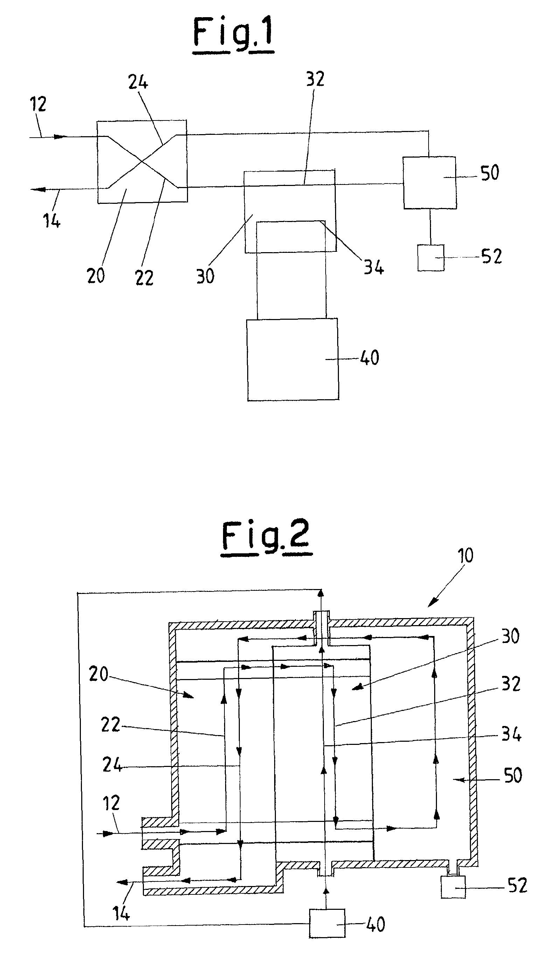

Figure 1 illustrates a scheme of a compressed gas refrigeration dryer 10, according to the known art, where a compressed gas to be dried enters an inlet pipe 12 and exits, dried, from an outlet pipe 14.

As already specified at the beginning of this description, it comprises the gas/gas heat exchanger 20 with a pre-cooling section 22 for the compressed gas to be dried and a heating section 24 for the dried compressed gas, and the evaporator 30 with a cooling section 32 for the compressed gas and an evaporation section 34 for a refrigerant, which follows a refrigeration cycle 40; the dryer also comprises an air condenser 50 and a discharger 52 for the condensed water vapor.

Figure 2 illustrates a scheme of a compressed gas refrigeration dryer 10 according to the present invention, where the thermal exchanges take place with streams in countercurrent.

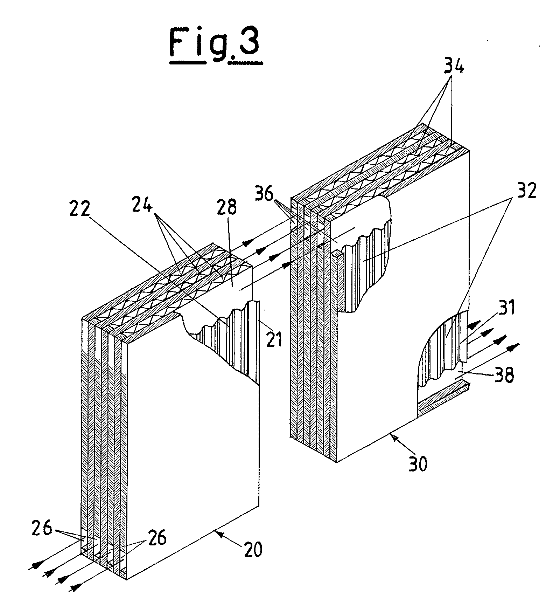

Figure 3 illustrates the recuperator 20, comprising a series of finned plates 21 and equipped with inlet zones 26 and outlet zones 28 for compressed gas, and the evaporator 30, which also comprises a series of finned plates 31, equipped with inlet zones 36 and outlet zones 38 and positioned beside the recuperator 20.

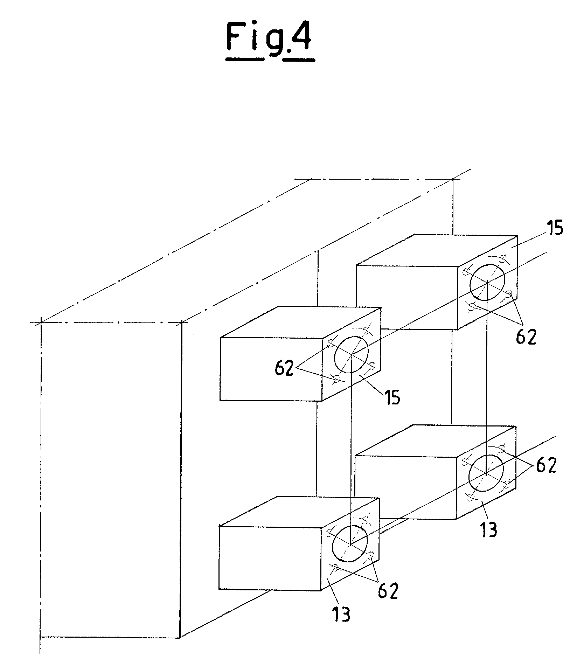

Figure 4 shows two dryers 10 according to the present invention arranged in parallel, where the inlet pipes 12 and the outlet pipes 14 have respective coplanar inlet connections 13 and outlet connections 15, with the same on centre.

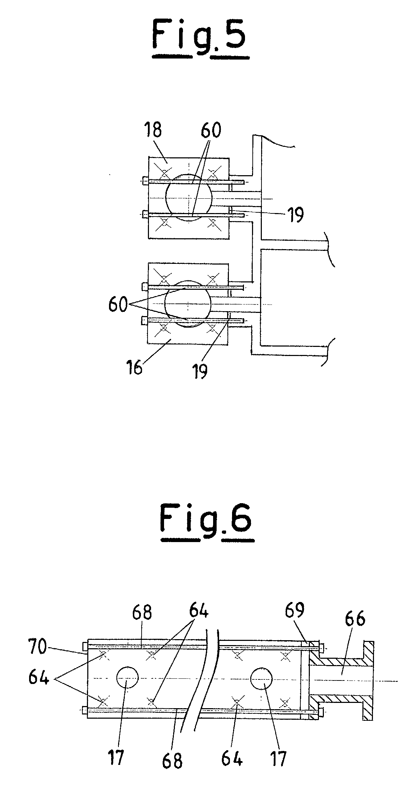

Figures 5 and 6 illustrate an inlet collector 16 and an outlet collector 18, fixed by means of tie rods 60 to the inlet connection 13 and outlet connection 15, which pass through blind holes 62 situated on the connections 13 and 15 and holes 64 situated on the collectors 16 and 18.

The collectors 16 and 18 have a series of side openings 17, complementary to and of the same number as the connections 13 and 15 of the dryers 10 arranged in parallel, which may also be more than the two illustrated in figure 4.

The collectors 16 and 18 are each equipped with a flanged connection 66, fixed by means of tie rods 68.

Between the connections 13 and 15 and the openings 17 of the collectors 16 and 18, there are gaskets 19, whereas gaskets 69 are inserted between the flanged connections 66 and the collectors 16 and 18.

In addition, a blind plate 70 closes each collector 16 and 18 on an opposite side of the flanged connections 66. This blind plate 70 is fixed with tie rods 68, inserting gaskets of the same type as the gasket 69, between the collectors 16 and 18 and the plates 70.

After presenting some of the elements which characterize the present invention, a more detailed description of the embodiment illustrated in the figures, is provided.

The thermal exchanges of the group of heat exchangers take place with streams in perfect countercurrent, and this is achieved in the following way.

The series of finned plates 21 forms, in the interlying spaces, a series of passages for the compressed gas to be dried and for that leaving the air condenser 50.

These are alternatively followed, one in one direction and the adjacent ones in the opposite direction, by the compressed gas to be dried and by the gas leaving the air condenser 50, and form the pre-cooling section 22 and pre-heating section 24, respectively.

Analogously, the series of finned plates 31 forms, in the interlying spaces, a series of passages for the compressed gas and for the refrigerant.

They are alternatively followed, one in one direction and the adjacent ones in the opposite direction, by the compressed gas and refrigerant of the refrigeration cycle 40, and form the cooling section 32 and evaporation section 34, respectively.

Furthermore, the gas/gas exchanger 20 and the evaporator 30 are positioned side-by-side so that the outlet zone 28 of the pre-cooling section 22 conducts the compressed gas directly to the inlet zone 36 of the cooling section 32.

It should also be pointed out that the inlet zones 26 and outlet zones 28 of the pre-cooling section 22 and the inlet zones 36 and outlet zones 38 of the cooling section 32 do not have finning, as can be clearly seen in figure 3.

In this way, the compressed gas is uniformly distributed in the passages before passing through the pre-cooling section 22 and cooling section 32, on whose finned plates 21 and 31 the thermal exchange mainly takes place.

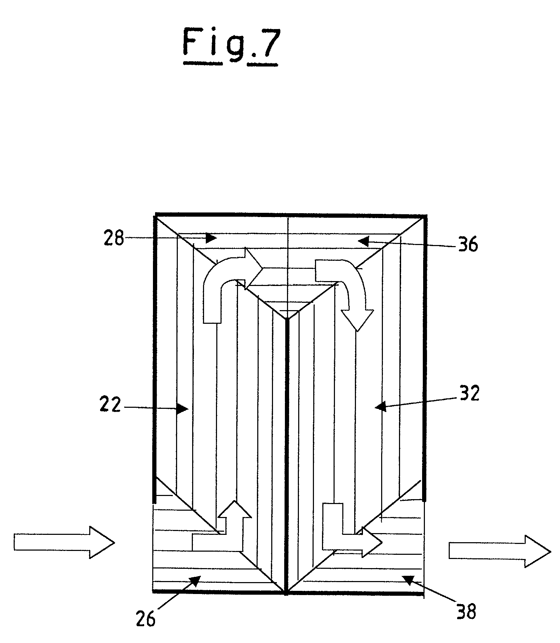

Alternatively, devices for assisting the fluid distribution, such as for example perforated metals, or finning similar to or the same as that used in sections 22 and 32, can be inserted in these inlet zones 26 and outlet zones 28 of the pre-cooling section 22 and inlet zones 36 and outlet zones 38 of the cooling section 32. The use of finning in zones 26, 28, 36 and 38, not only favours air distribution but also improves the thermal exchange. Furthermore, in order to further improve the air distribution, the finning of sections 21, 24, 31 and 34 and that of sections 22 and 32, can be cut as shown in figure 7 and positioned so that the orientation of the former is perpendicular to that of the latter.

The heating section 24 and evaporation section 34, on the other hand, can be finned for the whole length.

A further characteristic of the present invention consists in the coupling of several groups of heat exchangers of the type shown in figure 3, arranged in parallel.

In this way, a modular structure is created, which forms a group of multiple capacity exchangers.

To enable this, the inlet collector 16 and outlet collector 18 are used, which respectively connect the inlet connection 13 and outlet connection 15, thus reducing the dimensions and assembly labour.

The collectors 16 and 18 are obtained by extrusion and are mechanically processed to allow easy and rapid coupling with the compressed gas inlet connection 13 and outlet connection 15.

Each dryer 10, with a group of multiple capacity exchangers, has two collectors 16 and 18. Each of these has a number of side openings 17 equal to the number of groups of modular exchangers to be connected.

The collectors 16 and 18 are cut to measure in relation to the number of groups of modular exchangers.

To guarantee complete sealing between the group of modular exchangers and collectors 16 and 18, a gasket 19 is used for each inlet connection 13 and for each outlet connection 15. Furthermore, the fixture can be effected, for example, by means of four tie rods 60 for each connection 13 or 15, to be screwed to the blind holes 62 of the connections 13 and 15 themselves.

In order to connect the collectors 16 and 18 to the inlet pipes of compressed gas to be dried and outlet pipes of dried compressed gas, respectively, each of these is equipped, at the head, with a flanged connection 66. Each collector 16 and 18 is closed by a blind plate 70, on an opposite side of the flanged connection 66.

More specifically, the flanged connection 66 consists of a short cylindrical duct, to whose ends two perforated plates, with a hole equal to the external diameter of the duct, are welded, outside the duct.

One plate has a series of holes used for fixing, with corresponding tie rods 68, the flanged connection 66 to the collector 16 or 18 and to the opposite blind plate 70; the other plate is typically a flange which acts as a connection for the inlet and outlet pipes of the compressed gas.

As already specified, the end of the collectors 16 and 18, opposite to where there is the flanged connection 66, is closed by the blind plate 70, which therefore has a number of holes equal to that of the perforated plate of the flanged connection 66. These holes of the blind plate 70 correspond to the holes of the plate, in order to enable the tie rods 68 to be inserted.

It is known from the art that the efficiency of the heat exchange effected by means of cross-streams is poor.

This mainly occurs when the outlet temperatures of the two fluids cross, i.e. when the outlet temperature of the fluid which is heated must be higher than the temperature of the fluid which is being cooled, as generally takes place in compressed gas dryers.

For example, with an inlet temperature of compressed air, in the pre-cooling section, of 35°C and an inlet temperature in the heating section of the gas/gas exchanger of 3°C, with a cross-stream thermal exchange it is difficult to obtain an outlet temperature of the heating section higher than 25/26°C even if high exchange surfaces and particular and sophisticated finning are used.

On the contrary, with streams in countercurrent according to the present invention, with the same exchange surface, traditional finning and with the same pressure drops, it is possible to leave the heating section at a temperature which can exceed 30°C, increasing the heat recovered by even more than 20%.

Analogously, an evaporator which operates in perfect countercurrent and with the same exchange surface and the same pressure drops as an evaporator which operates with cross-streams, even if it uses traditional finning, allows the difference between the air outlet temperature and evaporating refrigerant temperature to be reduced, above all when the latter is a mixture of gas which does not evaporate at a constant temperature (for example R407c with a glide of about 6°C) and when the refrigerant must be overheated to minimize the liquid returns to the compressor, as generally happens in dryers.

The final result is an improved COP (i.e. Coefficient of Performance) thermodynamic efficiency of the refrigeration cycle.

Thanks to the increased efficiency of thermal exchanges with streams in countercurrent, to obtain the same performances as cross-stream exchangers, it is possible to use traditional finning.

Another advantage of the present invention consists in proposing two heat exchangers, recuperator and evaporator, one beside the other so as to minimize the dimensions of the exchanger group, guaranteeing however heat exchange in perfect countercurrent.

Furthermore, in order to obtain an even more compact dryer, the air condenser can be immediately adjacent to the evaporator, as shown in figure 2.

From what is described above with reference to the figures, it can be clearly seen how a group of heat exchangers for compressed gas refrigeration dryers according to the invention is particularly useful and advantageous. The objectives specified at the beginning of the description are thus achieved.

The forms, as also the materials, of the group of heat exchangers for refrigeration compressed gas dryers of the invention can naturally be different from that provided, as an illustrative but non-limiting example, in the drawings.

The sphere of protection of the invention is therefore defined by the enclosed claims.

## Claims

1. A group of heat exchangers for compressed gas refrigeration dryers, wherein a dryer (10) comprises a gas/gas heat exchanger (20), with thermal exchange which takes place between a pre-cooling section (22), for a mixture of compressed gases to be dried, which enters said dryer (10), and a heating section (24), for a mixture of dried gases, which leaves an air condenser (50), an evaporator (30), with thermal exchange which takes place between a cooling section (32), for said mixture of compressed gases to be dried which leaves said gas/gas heat exchanger (20), and an evaporation section (34), for a refrigerant; said dryer (10) also comprises said air condenser (50) connected to a discharger (52), and at least one refrigeration cycle (40) where said refrigerant flows, said mixture of gases leaving said cooling section (32) carrying with it a quantity of condensed water vapor which is separated from said mixture of compressed gases, said mixture of compressed gases being cooled until it reaches a desired dew point by means of pre-cooling in the exchanger (20) and cooling in the evaporator (30), where said refrigerant is evaporated, wherein a group of heat exchangers comprises said gas/gas heat exchanger (20) and said evaporator (30), **characterized in that** said heat exchangers (20, 30) comprise a series of closely spaced finned plates (21, 31), creating a series of passages for the countercurrent flow of said fluids, and **in that** said gas/gas heat exchanger (20) is positioned beside said evaporator (30), so that an outlet zone (28) of a pre-cooling section (22) of the gas/gas heat exchanger (20), directs the mixture of compressed gases directly to an inlet zone (36) of a cooling section (32) of the evaporator (30).

2. The group of heat exchangers according to claim 1, **characterized in that** inlet zones (26) and outlet zones (28) of said pre-cooling section (22) and inlet zones (36) and outlet zones (38) of the cooling section (32) are without finning, so that the mixture of compressed gases is uniformly distributed in the passages before passing through said pre-cooling section (22) and cooling section (32).

3. The group of heat exchangers according to claim 2, **characterized in that** elements for assisting the uniform distribution of the mixture of compressed gases are inserted in said inlet zones (26) and outlet zones (28) of the pre-cooling section (22) and in said inlet zones (36) and outlet zones (38) of the cooling section (32).

4. The group of heat exchangers according to claim 3, **characterized in that** said elements, in said inlet zones (26) and outlet zones (28) of the pre-cooling section (22) and in said inlet zones (36) and outlet zones (38) of the cooling section (32), can consist of finning similar to or the same as that of the pre-cooling section (22) and cooling section (32).

5. The group of heat exchangers according to claim 4, **characterized in that** said finning, in said zones (26) and (28) (36) and (38) and the finning of the pre-cooling section (22) and of the cooling section (32), are cut and arranged as illustrated in figure 7, the orientation of the former being perpendicular to that of the latter.

6. The group of heat exchangers according to claim 3, **characterized in that** said elements comprise perforated metals.

7. The group of heat exchangers according to claim 1, **characterized in that** said air condenser (50) is positioned immediately adjacent to said evaporator (30).

8. The group of heat exchangers according to claim 1, **characterized in that** at least two of said dryers (10), each equipped with an inlet connection (13), which is connected to an inlet pipe (12) for the mixture of compressed gases to be treated, and an outlet connection (15), which is connected to an outlet pipe (14) for the mixture of compressed gases to be treated, are arranged in parallel.

9. The group of heat exchangers according to claim 8, **characterized in that** said inlet connections (13) and outlet connections (15) are coplanar and have the same on center.

10. The group of heat exchangers according to claim 9, **characterized in that** said inlet connections (13) are connected to each other by an inlet collector (16), and that said outlet connections (15) are connected to each other by an outlet collector (18).

11. The group of heat exchangers according to claim 10, **characterized in that** said inlet collectors (16) and outlet collectors (18) have a series of side openings (17), complementary to each other and in the same number as the connections (13) and (15) of said dryers (10), arranged in parallel, and are fixed, by inserting gaskets (19), to said connections (13, 15) with constraints.

12. The group of heat exchangers according to claim 11, **characterized in that** said constraints comprise tie rods (60), which pass through blind holes (62), situated on a surface of said connections (13, 15), and holes (64), situated on the collectors (16, 18).

13. The group of heat exchangers according to claim 10 or 11, **characterized in that** said collectors (16, 18) are each equipped with a flanged connection (66) for connection to said inlet pipes (12) and outlet pipes (14) respectively, positioned on an end of said collectors (16, 18).

14. The group of heat exchangers according to claim 13, **characterized in that** said flanged connection (66) consists of a short cylindrical duct, to whose ends two perforated plates, with a hole equal to the external diameter of the duct, are welded, outside the duct, where one plate has a series of holes used for fixing, with corresponding tie rods (68), the flanged connection (66) to the collector (16, 18) and to a blind plate (70) whereas the other plate acts as a connection for the inlet (12) and outlet (14) pipes for the mixture of compressed gases, wherein said blind plate (70) closes the collector (16, 18) at an opposite side with respect to the position of said flanged connection (66).
